# FASCICULE DE BREVET EUROPEEN

(11) **EP 2 858 896 B1**
(45) Date de publication et mention de la délivrance du brevet: **27.04.2016**
(21) Numéro de dépôt: 13727217.5
(22) Date de dépôt: 07.06.2013
(51) Int. Cl.: B64C 13/04, G05G 9/047

(54) **MINIMANCHE DE PILOTAGE D'UN AERONEF**
JOYSTICK ZUM STEUERN EINES FLUGZEUGS
JOYSTICK FOR CONTROLLING AN AIRCRAFT

(30) Priorité: 07.06.2012 FR 1255325
(43) Date de publication de la demande: 15.04.2015
(73) Titulaire: SAGEM DEFENSE SECURITE, 92100 Boulogne Billancourt (FR)
(72) Inventeur: BUOY, Florence, F-92100 Boulogne-Billancourt (FR); MERLET, Etienne, F-92100 Boulogne-Billancourt (FR); GORECKI, Hervé, F-92100 Boulogne-Billancourt (FR)
(74) Mandataire: Regimbeau
(86) Numéro de dépôt international: PCT/EP2013/061794
(87) Numéro de publication internationale: WO 2013/182680

(56) Documents cités:
- EP-A2- 2 136 280

## Description

### DOMAINE DE L'INVENTION

L'invention concerne un minimanche de pilotage d'un aéronef.

### ETAT DE LA TECHNIQUE

On connaît des avions conventionnels dont les gouvernes sont commandées par déplacement d'un manche de pilotage relié mécaniquement aux gouvernes orientables de la voilure.

On connaît aussi des avions pour lesquelles l'orientation des gouvernes est réalisée par des actionneurs électriques et/ou hydrauliques commandés à l'aide de capteurs de déplacement du manche. Sur de tels appareils, le manche n'est donc pas lié mécaniquement aux gouvernes et le pilote ne ressent pas au niveau du manche de résistance qui lui permette d'estimer les mouvements des gouvernes et les efforts qu'elles subissent.

Certains manches de pilotage sont toutefois équipés de dispositifs actifs et/ou passifs permettant de simuler un retour d'effort sur le manche.

Par ailleurs, dans certains avions équipés de commandes de vol électriques, le manche de pilotage a été remplacé par un dispositif de pilotage appelé « minimanche ». Plus compact qu'un manche de pilotage classique, le minimanche est généralement intégré dans un accoudoir du siège du pilote et comprend une manette que le pilote actionne par le seul mouvement de son poignet. L'installation de minimanches a permis de dégager l'espace situé entre le pilote et le tableau de bord afin d'y installer d'autres équipements.

Un tel minimanche est connu de EP-2136280, qui est considéré comme l'état de la technique le plus proche.

Le minimanche inclut généralement un ensemble de ressorts permettant d'exercer des efforts de rappel sur chacun des axes de rotation de la manette (axe de roulis et axe de tangage) et de ramener la manette en position neutre lorsque le pilote n'exerce aucun effort sur la manette.

Comme le minimanche est piloté à l'aide du poignet, les efforts de rappel devant être générés sont beaucoup plus faibles que les efforts de rappel générés sur les manches de pilotage traditionnels.

Dans le même temps, la sensibilité du pilote au comportement du minimanche est accrue. Il est donc important de pouvoir générer des efforts de rappel selon une loi d'effort définie de manière précise et stable (c'est-à-dire reproductible). Cependant, l'existence de frottements dans les mécanismes existants tend à dégrader le comportement du minimanche tel qu'il est ressenti par le pilote.

En particulier, lorsque le minimanche est équipé de capteurs d'effort, les frottements se produisant entre les pièces du mécanisme entrainent un biais et une hystérésis dans les mesures réalisées par ces capteurs, de sorte que le retour d'effort ne peut pas être généré de manière précise.

Outre les problèmes de frottements, les dispositifs passifs usuels sont souvent source de non linéarité de l'effort élastique, voire de couplage induit par le déplacement d'un axe sur l'effort ressenti sur le second axe normalement indépendant. Autant de phénomènes qui concourent à l'imprécision du retour d'effort.

### RESUME DE L'INVENTION

Un but de l'invention est de proposer un minimanche de pilotage d'un aéronef, simple, robuste et sans risque de grippage, permettant de créer des efforts de rappel avec une bonne précision et de manière stable.

Ce but est atteint, dans le cadre de la présente invention, grâce à un minimanche de pilotage d'un aéronef, comprenant :
- un bâti,
- une manette,
- un ensemble mécanique de liaison de la manette au bâti autorisant une rotation de la manette par rapport au bâti selon un premier axe de rotation,
dans lequel l'ensemble mécanique de liaison comprend un premier joint pivot, le premier joint pivot comprenant une première partie, une deuxième partie montée mobile par rapport à la première partie, et au moins deux lames flexibles, chaque lame flexible présentant une extrémité fixée à la première partie et une autre extrémité fixée à la deuxième partie et étant déformable élastiquement pour autoriser une rotation de la deuxième partie par rapport à la première partie selon le premier axe de rotation et générer un couple de rappel tendant à s'opposer à la rotation de la deuxième partie par rapport à la première partie.

La structure du joint pivot utilisé dans l'ensemble mécanique de liaison permet de guider la manette en rotation sans créer de frottement et, en même temps, de générer un retour d'effort sur la manette.

De plus, la structure du joint permet d'intégrer des capteurs au sein même de l'articulation.

Par ailleurs, plusieurs joints pivots peuvent être assemblés en série pour produire des lois de retour d'effort complexe.

Le minimanche selon l'invention peut en outre présenter les caractéristiques suivantes :
- la deuxième partie du premier joint pivot est mobile en rotation par rapport à la première partie du premier joint pivot à partir d'une position de repos selon un premier sens de rotation uniquement, et le premier joint pivot comprend une première butée agencée pour interdire un débattement de la deuxième partie dans un deuxième sens opposé au premier sens,
- l'ensemble mécanique de liaison comprend un premier jeu de joints pivots, incluant le premier joint pivot et un deuxième joint pivot, le deuxième joint pivot comprenant une première partie et une deuxième partie montée mobile en rotation par rapport à la première partie à partir d'une position de repos selon le deuxième sens de rotation uniquement, et le deuxième joint pivot comprend une deuxième butée agencée pour interdire un débattement de la deuxième partie dans le premier sens opposé au deuxième sens,
- la première butée est agencée de sorte que lorsque le premier joint est en position de repos, les lames du premier joint pivot sont fléchies et exercent sur la deuxième partie du premier joint pivot un couple de rappel non-nul,
- la première butée est ajustable en position de manière à autoriser un réglage du couple de rappel non-nul,
- au moins un joint pivot comprend un premier couple de lames et un deuxième couple de lames, chaque couple de lames générant un couple de rappel selon le premier axe de rotation,
- le premier couple de lames et le deuxième couple de lames sont disposés symétriquement l'un par rapport à l'autre,
- au moins un joint pivot comprend en outre un élément élastique reliant la première partie et la deuxième partie entre elles et lorsque les lames du joint pivot ne sont pas fléchies, l'élément élastique est en traction entre la première partie et la deuxième partie, de sorte que l'élément élastique génère un effort de rappel tendant à provoquer la rotation de la deuxième partie par rapport à la première partie,
- l'ensemble mécanique de liaison comprend une première chaîne de joints pivots, incluant le premier joint pivot et un troisième joint pivot monté en série avec le premier joint pivot, la première partie du premier joint ou respectivement la deuxième partie du premier joint, étant montée solidaire de la deuxième partie ou respectivement de la première partie du troisième joint pivot,
- le premier joint pivot comprend une première butée agencée pour limiter un débattement de la deuxième partie du premier joint pivot dans un premier sens de rotation, et le troisième joint pivot comprend une troisième butée agencée pour limiter un débattement de la première partie du troisième joint pivot dans le premier sens de rotation, de sorte que lorsque la manette est entrainée en rotation par rapport au bâti dans le premier sens de rotation, le premier joint pivot et le troisième joint pivot viennent successivement en butée,
- la première butée et/ou la troisième butée est ajustable en position de manière à autoriser un réglage du débattement à partir duquel le premier joint pivot et/ou le troisième joint pivot vient en butée,
- l'ensemble mécanique de liaison comprend un capteur de contrainte ou de déformation monté sur l'une des lames, la lame servant de corps d'épreuve au capteur,
- l'ensemble mécanique de liaison autorise une rotation de la manette par rapport au bâti selon un deuxième axe de rotation, perpendiculaire au premier axe de rotation, et l'ensemble mécanique de liaison comprend un quatrième joint pivot, le quatrième joint pivot comprenant une première partie, une deuxième partie montée mobile par rapport à la première, et au moins deux lames flexibles, chaque lame flexible reliant la première partie et la deuxième partie entre elles et étant déformable élastiquement pour autoriser une rotation de la deuxième partie par rapport à la première partie selon le deuxième axe de rotation et générer un couple de rappel tendant à s'opposer à la rotation de la deuxième partie par rapport à la première partie,
- l'ensemble mécanique de liaison comprend une deuxième chaîne de joints pivots, incluant le quatrième joint pivot et un cinquième joint pivot monté en série avec le quatrième joint pivot, la première partie du quatrième joint ou la deuxième partie du quatrième joint, étant montée solidaire de la deuxième partie ou respectivement de la première partie du cinquième joint pivot.

### PRESENTATION DES DESSINS :

D'autres caractéristiques et avantages ressortiront encore de la description qui suit, laquelle est purement illustrative et non limitative, et doit être lue en regard des figures annexées, parmi lesquelles :
- la figure 1 représente de manière schématique un minimanche conforme à un premier mode de réalisation de l'invention,
- les figures 2A et 2B représentent de manière schématique un joint pivot pouvant être utilisé dans le minimanche selon la revendication 1,
- les figures 3A à 3C représentent de manière schématique respectivement le joint pivot en position de repos, le joint pivot en position chargée et une loi de variation du couple généré par le joint pivot en fonction d'un angle de rotation autour de son axe principal,
- la figure 4 représente de manière schématique une première variante du joint pivot,
- les figures 5A et 5B représentent de manière schématique respectivement une deuxième variante du joint pivot et une loi de variation du couple généré par le joint en fonction d'un angle de rotation,
- les figures 6A et 6B représentent de manière schématique respectivement une troisième variante du joint pivot et une loi de variation du couple généré par le joint en fonction d'un angle de rotation,
- les figures 7A et 7B représentent de manière schématique une quatrième variante du joint pivot,
- les figures 8A et 8B représentent de manière schématique respectivement un assemblage en série de deux joints pivots et une loi de variation du couple généré par l'assemblage en fonction d'un angle de rotation,
- la figure 9A représente de manière schématique le minimanche selon le premier mode de réalisation dans une configuration dans laquelle la manette est inclinée selon un premier axe de rotation,
- la figure 9B représente de manière schématique le minimanche selon le premier mode de réalisation dans une configuration dans laquelle la manette est inclinée selon un deuxième axe de rotation, perpendiculaire au premier axe,
- les figures 9C et 9D représentent de manière schématique une loi de variation du couple généré par le joint en fonction d'un angle de rotation respectivement selon le premier axe et selon le deuxième axe,
- la figure 10 représente de manière schématique un minimanche conforme à un deuxième mode de réalisation de l'invention,
- la figure 11A représente de manière schématique le minimanche selon le deuxième mode de réalisation dans une configuration dans laquelle la manette est inclinée selon un premier axe de rotation,
- la figure 11B représente de manière schématique le minimanche selon le deuxième mode de réalisation dans une configuration dans laquelle la manette est inclinée selon un deuxième axe de rotation, perpendiculaire au premier axe,
- la figure 11C représente de manière schématique une loi de variation du couple généré par le joint en fonction d'un angle de rotation selon le premier axe ou selon le deuxième axe.

### DESCRIPTION DETAILLEE

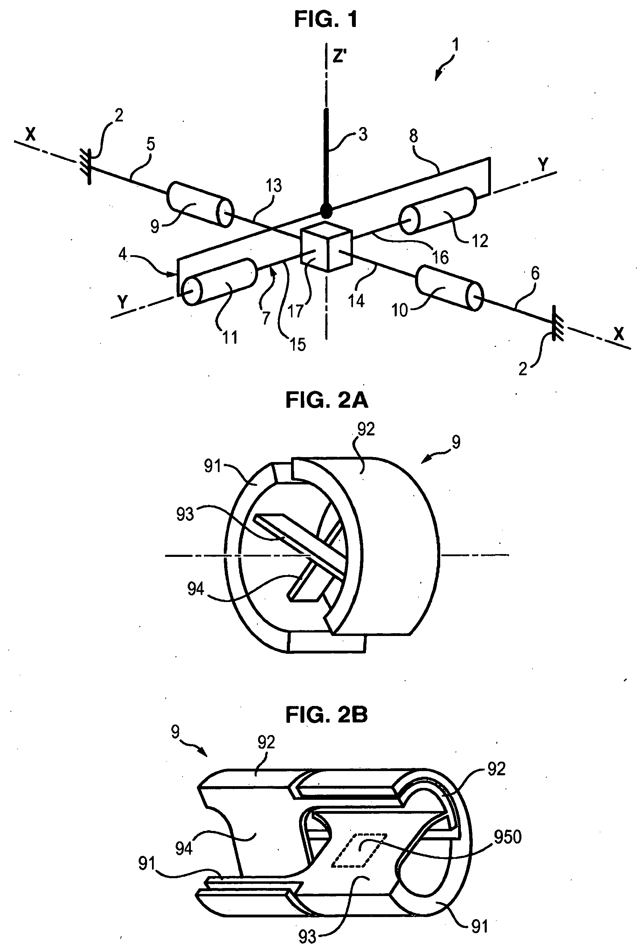

La figure 1 représente de manière schématique un minimanche 1 conforme à un premier mode de réalisation de l'invention.

Le minimanche 1 comprend un bâti 2 destiné par exemple à être intégré dans un accoudoir d'un siège de pilotage, une manette 3 montée mobile en rotation par rapport au bâti 2, et un ensemble mécanique de liaison 4 de la manette au bâti permettant de générer un retour d'effort sur la manette selon deux axes de rotation X et Y.

La manette 3 présente une forme générale allongée selon une direction longitudinale (axe Z').

L'ensemble mécanique de liaison 4 comprend deux pièces de support 5 et 6 montées fixes par rapport au bâti 2, une pièce intermédiaire 7 montée mobile en rotation par rapport aux pièces de support 5 et 6 autour du premier axe X, et une pièce de raccordement 8 sur laquelle est fixée la manette 3, la pièce de raccordement 8 étant montée mobile en rotation par rapport à la pièce intermédiaire 7 autour du deuxième axe Y. Le deuxième axe Y est perpendiculaire au premier axe X. De plus, lorsque la manette 3 est en position neutre, les axes X, Y et Z' sont orthogonaux entre eux.

L'ensemble mécanique de liaison 4 comprend en outre un premier couple de joints pivots 9, 10 et un deuxième couple de joints pivots 11, 12.

La pièce intermédiaire 7 présente une forme en croix. Plus précisément, la pièce intermédiaire 7 comprend quatre bras 13 à 16 s'étendant à partir d'un point d'attache commun 17, chaque bras étant raccordé au niveau de son extrémité libre à un joint pivot 9 à 12 respectif.

Le premier couple de joints pivots inclut un premier joint pivot 9 monté entre la pièce de support 5 et la pièce intermédiaire 7 et un deuxième joint pivot 10 monté en parallèle du premier joint pivot 9, entre la pièce de support 6 et la pièce intermédiaire 7. Les joints pivots 9 et 10 autorisent une rotation de la pièce intermédiaire 7 par rapport au bâti 2 autour de l'axe X.

Le deuxième couple de joints pivots inclut un troisième joint pivot 11 monté entre la pièce intermédiaire 7 et la pièce de raccordement 8 et un quatrième joint pivot 12 monté en parallèle du troisième joint pivot 11, entre la pièce intermédiaire 7 et la pièce de raccordement 8. Les joints pivots 11 et 12 autorisent une rotation de la pièce intermédiaire 7 par rapport au bâti 2 autour de l'axe Y.

L'ensemble mécanique de liaison 4 permet une rotation de la manette 3 par rapport au bâti 2 simultanément autour de l'axe X et autour de l'axe Y, permettant par exemple au pilote de commander l'aéronef en roulis et en tangage.

Les figures 2A et 2B représentent de manière schématique un joint pivot 9 pouvant être utilisé dans un minimanche conforme à la figure 1.

Le joint pivot 9 comprend une première partie 91 et une deuxième partie 92 montée mobile par rapport à la première partie 91. La première partie 91 est fixée à la pièce de support 5 (c'est-à-dire au bâti 2) et la deuxième partie 92 est fixée à la pièce intermédiaire 7.

La première partie 91 et la deuxième partie 92 présentent chacune une forme générale cylindrique et sont positionnées l'une par rapport à l'autre avec leurs axes de révolution confondus, les deux parties 91 et 92 ayant un tronçon cylindrique de même rayon interne par rapport à cet axe de révolution commun.

Le joint pivot 9 comprend également deux lames flexibles 93 et 94, chaque lame flexible reliant la première partie 91 et la deuxième partie 92 entre elles. Les deux lames flexibles incluent une première lame 94 s'étendant parallèlement à un premier plan et une seconde lame 93 s'étendant parallèlement à un deuxième plan, orthogonal au premier plan. Le premier plan et le deuxième plan passent par l'axe de révolution commun des parties 91 et 92.

Chaque lame flexible 93, respectivement 94, présente une première extrémité fixée à la première partie 91 et une deuxième extrémité fixée à la deuxième partie 92. Plus précisément, chaque extrémité de la lame 93, respectivement 94, est liée mécaniquement par une liaison complète (ou encastrement) à l'une des parties 91, 92.

Les lames 93, 94 sont déformables élastiquement en flexion pour autoriser une rotation de la deuxième partie 92 par rapport à la première partie 91 selon un axe de rotation correspondant à l'axe de révolution commun des parties 91 et 92, et générer un couple de rappel tendant à s'opposer à la rotation de la deuxième partie 92 par rapport à la première partie 91.

Ainsi, les lames 93 et 94 assurent un guidage en rotation de la deuxième partie 92 par rapport à la première partie 91, selon un unique degré de liberté (rotation selon un seul axe de rotation).

Les lames 93 et 94 travaillent en flexion pure, et chaque lame peut être utilisée comme corps d'épreuve pour supporter un capteur 950, tel que par une jauge de contrainte par exemple. Cela permet d'obtenir une mesure directement représentative du couple ou du débattement au plus près de leur origine et par conséquent, non perturbée par des frottements ou des jeux.

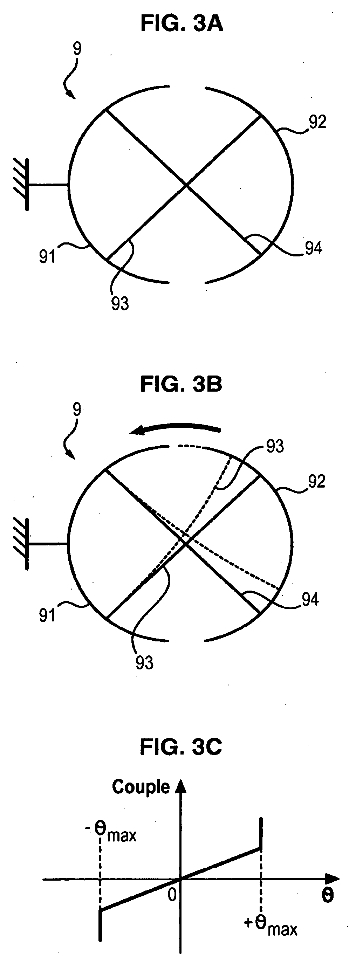

Les figures 3A à 3C illustrent de manière schématique le fonctionnement du joint pivot 9.

Sur la figure 3A, le joint pivot 9 est en position de repos. Dans cette position, les lames flexibles 93, 94 ne sont pas fléchies et ne génèrent aucun couple de rappel.

Sur la figure 3B, la deuxième partie 92 est entraînée en rotation par rapport à la première partie 91. Les lames flexibles 93 et 94 (représentées en traits pointillés) sont fléchies et, du fait de leur élasticité, génèrent sur la deuxième partie 92 un couple de rappel sensiblement proportionnel à l'angle de rotation θ de la deuxième partie 92 par rapport à la première partie 91.

La figure 3C représente de manière schématique la loi de variation du couple de rappel généré par le joint pivot en fonction de l'angle de rotation θ. Le couple de rappel généré par le joint pivot 9 est proportionnel à l'angle de rotation θ dans les deux sens de rotation, dans une plage de débattement angulaire comprise entre -θmax et +θmax. Dans cette plage, la loi est linéaire et symétrique par rapport à la position de repos 0 du joint pivot. Les angles maximum de rotation -θmax et +θmax correspondent aux positions extrêmes du joint de pivot dans lesquelles la deuxième partie 92 est en butée contre la première partie 91.

La structure des joints pivots 10 à 12 représentés sur la figure 1 est identique à celle qui vient d'être décrite pour le joint pivot 9 en relation avec les figures 2A, 2B, 3A, 3B et 3C.

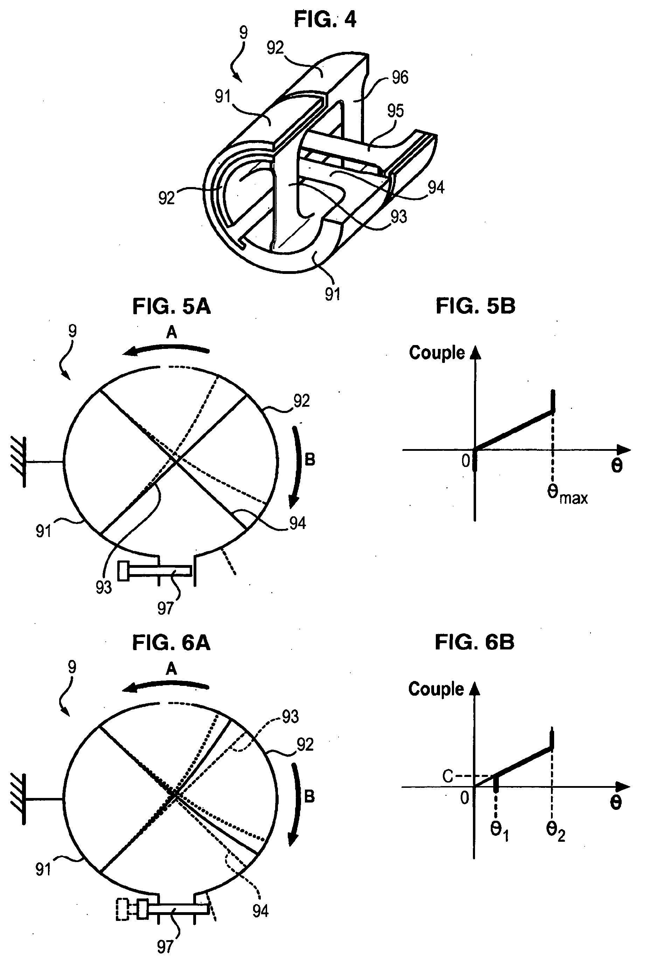

La figure 4 représente de manière schématique une première variante du joint pivot 9 des figures 2A et 2B.

Dans cette variante, le joint pivot 9 comprend quatre lames 93 à 96. Les lames incluent un premier couple de lames 93, 94 et un deuxième couple de lames 95, 96, les couples de lames étant disposés symétriquement l'un par rapport à l'autre.

Chaque couple de lames comprend une première lame 93 (respectivement 96) s'étendant parallèlement à un premier plan et une deuxième lame 94 (respectivement 95) s'étendant parallèlement à un deuxième plan orthogonal au premier plan.

Les premières lames 93 et 96 (ou lames latérales) s'étendent de part et d'autre des deuxièmes lames 94 et 95 (ou lames centrales), les deuxièmes lames 94 et 95 étant agencées côté à côte.

Cette première variante permet une sécurisation en cas de fissuration de l'une des lames. En cas de fissure accidentelle de l'une des lames, il est alors possible dé conserver un fonctionnement en mode dégradé, en conservant la fonction de guidage de la liaison pivot, sans perte de débattement, et avec une raideur fonctionnelle diminuée d'un quart seulement (une lame sur quatre en mode de rotation nominal). Les lames doivent être séparées les unes des autres au-delà de leur encastrement de façon à ce que la rupture éventuelle de l'une lame ne se propage pas à l'autre lame.

La figure 5A représente de manière schématique une deuxième variante du joint pivot 9.

Dans cette variante, la deuxième partie 92 du joint pivot 9 est mobile en rotation par rapport à la première partie 91 du joint pivot à partir d'une position de repos (position du joint lorsqu'aucun effort n'est appliqué sur le joint), selon un premier sens de rotation uniquement (flèche A). A cet effet, le joint pivot 9 comprend une butée 97 agencée pour interdire une rotation de la deuxième partie 92 par rapport à la première partie 91 dans un deuxième sens de rotation (flèche B), opposé au premier sens.

La figure 5B représente de manière schématique la loi de variation du couple de rappel généré par le joint pivot 9 en fonction d'un angle de rotation θ de la deuxième partie par rapport à la première partie. Le couple de rappel généré par le joint pivot 9 est proportionnel à l'angle de rotation θ dans le premier sens de rotation, et ce dans une plage de débattement comprise entre 0 et +θmax. Dans cette plage, la loi est linéaire.

La figure 6A représente de manière schématique une troisième variante du joint pivot.

Dans cette variante, la butée 97 est agencée de sorte que lorsque le joint est en position de repos (c'est-à-dire qu'aucun effort n'est appliqué sur le joint), les lames 93, 94 du joint pivot 9 sont fléchies et exercent sur la deuxième partie 92 du joint un couple de rappel non-nul tendant à maintenir la deuxième partie 92 en appui contre la butée 97.La figure 6B représente de manière schématique la loi de variation du couple de rappel généré par le joint pivot 9 en fonction, de l'angle de rotation θ. Le couple de rappel généré par le joint pivot 9 est proportionnel à l'angle de rotation θ dans le premier sens de rotation (flèche A), et ce dans une plage de débattement comprise entre +θ₁ et +θ₂, avec +θ₂>+θ₁>0. Dans cette plage, la loi est linéaire. Les angles extrêmes de rotation +θ₁ et +θ₂ correspondent respectivement à la position dans laquelle la deuxième partie 92 est en appui contre la butée 97 et à la position dans laquelle la deuxième partie 92 est en appui contre la première partie 91 (la première partie 91 constituant alors une butée pour la deuxième partie 92).

La position de la butée 97 peut être ajustée (par exemple au moyen d'un élément fileté) de manière à régler l'angle +θ₁ afin d'ajuster le couple minimal d'actionnement C.

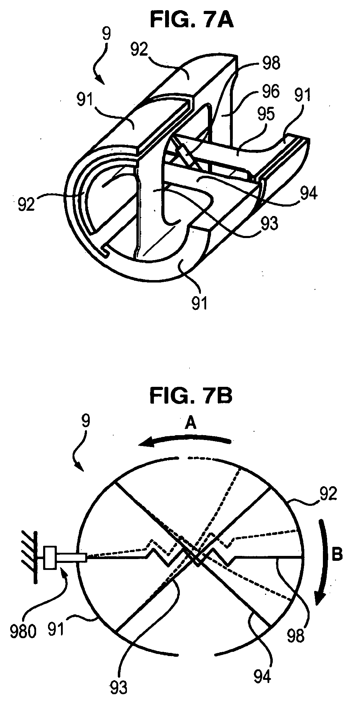

La figure 7A représente de manière schématique une quatrième variante du joint pivot 9.

Cette quatrième variante est ici identique à la deuxième variante, mais pourrait s'appliquer à toute autre variante. Dans la quatrième variante, le joint pivot 9 comprend en plus un élément élastique 98, tel qu'un ressort par exemple, reliant la première partie 91 et la deuxième partie 92 entre elles. L'élément élastique 98 est maintenu en élongation dans toute la plage de débattement angulaire de la deuxième partie 92 par rapport à la première partie 91.

L'élément élastique 98 est disposé entre les lames centrales 94, 95 et s'étend selon une direction formant un angle de 45 degrés par rapport aux lames 93, 94, 95 et 96.

Comme cela est illustré sur la figure 7B, lorsque les lames 93 à 96 du joint pivot 9 ne sont pas fléchies, l'élément élastique 98 passe par l'axe de rotation de la deuxième partie 92 par rapport à la première partie 91, de sorte que bien que l'élément élastique 98 soit en traction entre la première partie 91 et la deuxième partie 92, il n'exerce entre ceux-ci aucun couple. Autrement dit, l'élément élastique 98 se trouve en position d'équilibre lorsque les lames 93 à 96 ne sont pas fléchies, et il n'exerce donc aucun effort entre la première partie 91 et la deuxième partie 92.

Dès que la deuxième partie 92 est déplacée en rotation par rapport à la première partie 91, l'effort élastique généré par l'élément élastique 98 ne passe plus par l'axe de rotation du joint pivot 9, et il tend à favoriser la rotation dans le même sens que celui de la deuxième partie 92 par rapport à la première partie 91.

Grâce à cet agencement, l'élément élastique 98 génère un couple de rappel négatif qui compense, au moins en partie, le couple de rappel positif généré par les lames 93 à 96. En choisissant de manière appropriée les caractéristiques de l'élément élastique 98, il est possible de concevoir un joint pivot 9 sans frottement et présentant une raideur nulle au voisinage de la position neutre.

En outre, il est possible de prévoir des moyens de réglage 980 de la tension de l'élément élastique 98 (par exemple un élément fileté coopérant avec la première partie 91), permettant d'ajuster la raideur résultante du joint pivot 9.

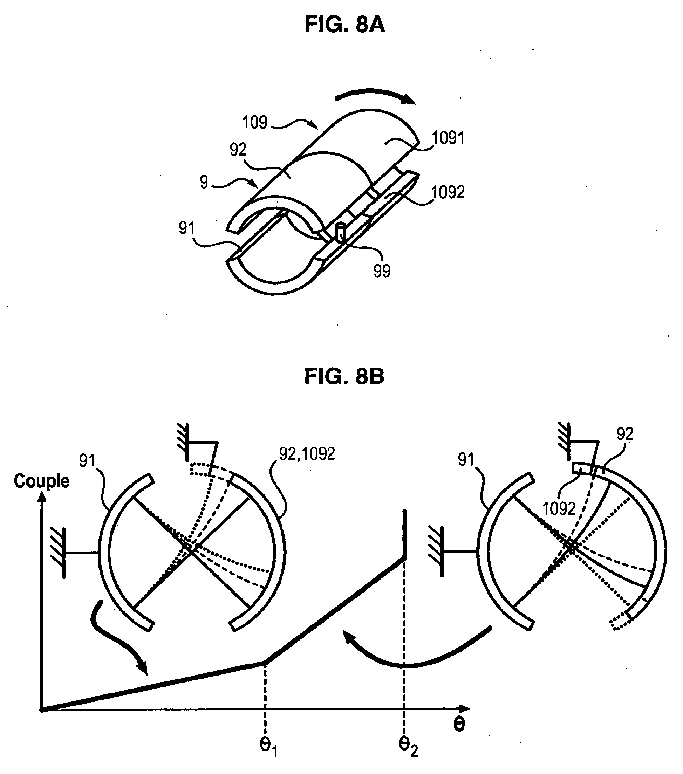

La figure 8A représente de manière schématique un assemblage en série de deux joints pivots 9 et 109, en vue de former une chaîne de joints pivots. Dans cet assemblage, la première partie 1091 du joint pivot 109 est fixée à la deuxième partie 92 du joint pivot 9.

De plus, dans l'exemple représenté sur la figure 8A, seul l'un des joints pivots 9 comprend une butée 99 limitant le débattement du joint pivot.

La position de la butée 99 peut être ajustée (par exemple au moyen d'un élément fileté coopérant avec la première partie 91 du joint pivot 9) de manière à régler l'angle +θ₁ de changement de raideur de l'assemblage.

La figure 8B représente de manière schématique la loi de variation du couple de rappel généré par l'assemblage de joints pivots en fonction de l'angle de rotation θ de la deuxième partie 1092 du joint pivot 109 par rapport à la première partie 91 du joint pivot 9.

La loi de variation obtenue présente une double pente. Plus précisément, la raideur suit une loi de variation définie par tronçons.

Dans une première plage de débattement comprise entre 0 et θ₁, les deux joints pivots 9 et 109 sont entraînés en rotation simultanément. Le couple de rappel résultant généré par l'assemblage des joints 9 et 109 est une combinaison des couples de rappel individuels générés par les deux joints pivots 9 et 109. Ce couple de rappel résultant est proportionnel à l'angle de rotation θ de la deuxième partie 1092 du joint pivot 109 par rapport à la première partie 91 du joint pivot 9 avec une première raideur résultant de la combinaison des raideurs individuelles des deux joint pivots 9 et 109 en série.

Lorsque l'angle de rotation θ atteint θ₁, la deuxième partie 92 du joint pivot 9 vient en contact contre la butée 99 de sorte que la deuxième partie 92 ne peut plus être entrainée en rotation par rapport à la première partie 91.

Dans une deuxième plage de débattement comprise entre θ₁ et θ₂, le couple de rappel généré par l'assemblage des joints 9 et 109 varie de manière linéaire avec une deuxième raideur égale à la raideur individuelle du joint pivot 109 seul.

Lorsque l'angle de rotation θ atteint θ₂, la deuxième partie 1092 du joint pivot 109 arrive en butée contre la première partie 1091 du joint pivot 109 et la deuxième partie 1092 ne peut plus être entrainée en rotation par rapport à la première partie 1091. Aucune rotation de l'assemblage n'est plus possible au-delà de θ₂.

Le même fonctionnement peut être obtenu en assemblant en série des joints pivots 9 et 109 présentant un même débattement angulaire, mais des raideurs différentes. En effet, à débattement égal, le joint pivot le plus souple arrive en butée avant le joint pivot le plus raide. Lorsque le joint pivot le plus souple atteint sa butée, la raideur de l'assemblage, initialement plus faible que chacune des deux raideurs, se trouvera ramenée à la raideur du joint pivot le plus raide qui n'aura pas encore atteint sa butée.

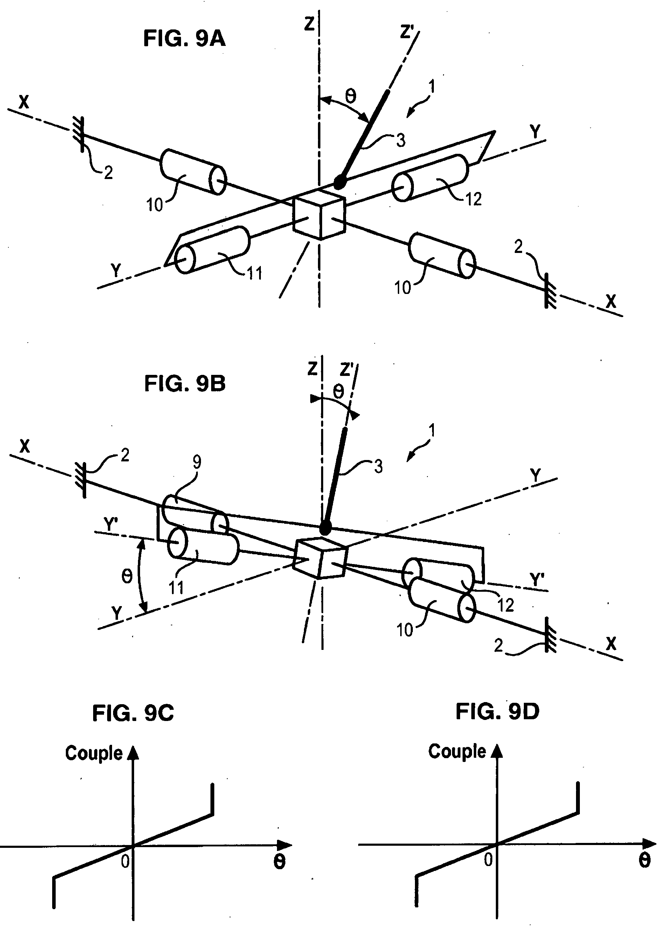

La figure 9A représente de manière schématique le minimanche 1 selon le premier mode de réalisation dans une configuration dans laquelle la manette 3 est inclinée d'un angle θ selon le deuxième axe de rotation Y.

La figure 9C représente de manière schématique la loi de variation du couple généré par les deux joints 11 et 12 sur la manette 3 en fonction de l'angle de rotation θ de la manette 3 par rapport au bâti 2 autour de l'axe Y.

La figure 9B représente de manière schématique le minimanche 1 selon le premier mode de réalisation dans une configuration dans laquelle la manette 3 est inclinée d'un angle θ selon le premier axe de rotation X.

La figure 9D représente de manière schématique une loi de variation du couple généré par les deux joints 9 et 10 sur la manette 3 en fonction de l'angle de rotation θ de la manette 3 par rapport au bâti 2 autour de l'axe X.

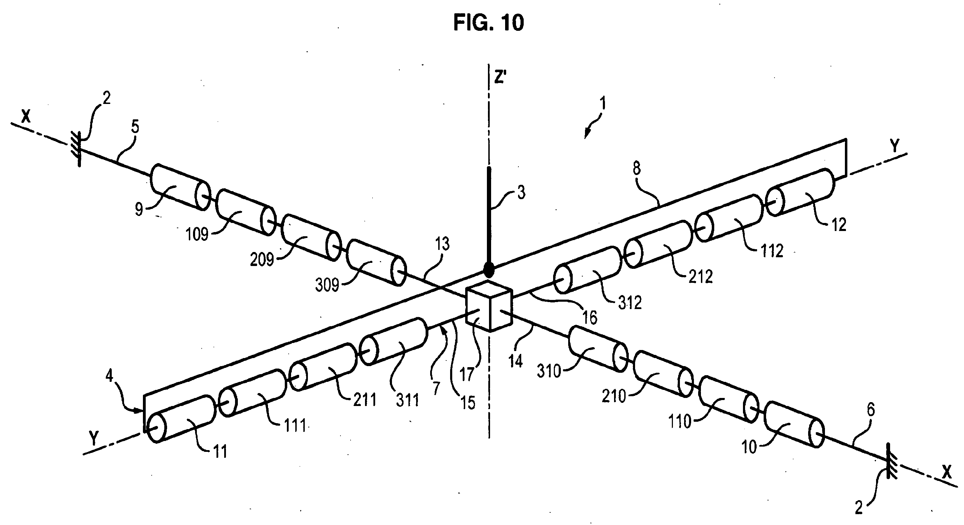

La figure 10 représente de manière schématique un minimanche 1 conforme à un deuxième mode de réalisation de l'invention.

Ce deuxième mode de réalisation est identique au premier mode de réalisation, excepté que le premier joint pivot 9 et le deuxième joint pivot 10 ont été remplacés par une première chaîne de joints pivots 9, 109, 209, 309 et une deuxième chaîne de joints pivots 10, 110, 210, 310 montées entre les pièces de support 2 et la pièce intermédiaire 7.

De même, le troisième joint pivot 11 et le quatrième joint pivot 12 ont été remplacés par une troisième chaîne de joints pivots 11, 111, 211, 311 et une quatrième chaîne de joints pivots 12, 112, 212, 312 montées entre la pièce intermédiaire 7 et la pièce de raccordement 8.

Dans l'exemple représenté sur la figure 10, chaque chaîne de joints pivots comprend quatre joints pivots montés en série, incluant :
- deux joints pivot mobiles en rotation à partir d'une position précontrainte selon un premier sens de rotation uniquement (flèche A), à savoir les joints pivots 9, 109, 10, 110, 11, 111, 12, 112,
- deux joints pivot mobiles en rotation à partir d'une position précontrainte selon un deuxième sens de rotation uniquement (flèche B), le deuxième sens de rotation étant opposé au premier sens de rotation, à savoir les joints pivots 209, 309, 210, 310, 211, 311, 212, 312.

A cet effet, les joints pivots 9, 109, 10, 110, 11, 111, 12, 112 comprennent une butée 97, telle que celle qui est représentée sur la figure 5A ou 6A, interdisant le débattement du joint dans le deuxième sens de rotation.

De même, les joints pivots 209, 309, 210, 310, 211, 311, 212, 312 comprennent une première butée 97, telle que celle qui est représentée sur la figure 5A ou 6A, interdisant le débattement du joint dans le premier sens de rotation.

De plus, chacun des joints pivots 9, 10, 11 et 12 comprend une deuxième butée 99 limitant le débattement du joint dans le premier sens de rotation, telle que celle qui est représentée sur la figure 8A.

De même, chacun des joints pivots 209, 210, 211 et 212 comprend une deuxième butée 99 limitant le débattement du joint dans le deuxième sens de rotation, telle que celle qui est représentée sur la figure 8A.

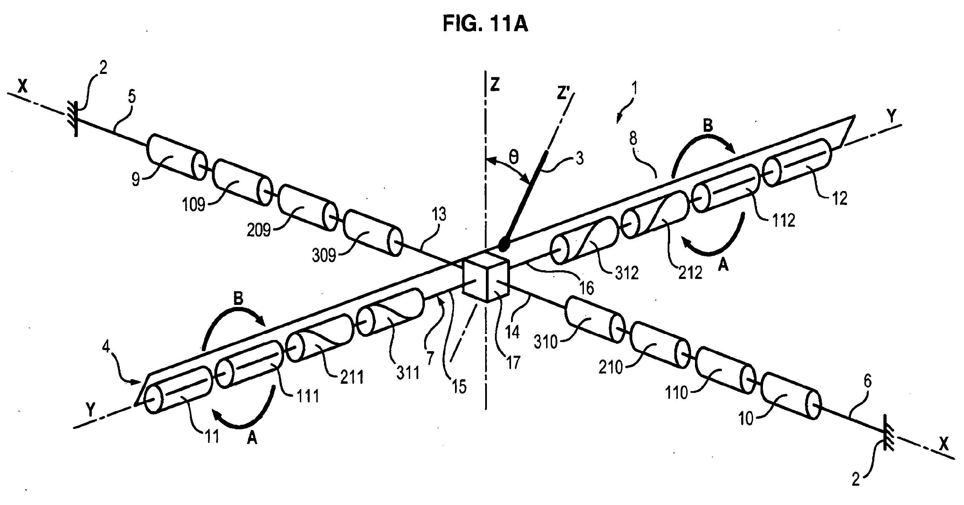

La figure 11A représente de manière schématique le minimanche 1 selon le deuxième mode de réalisation dans une configuration dans laquelle la manette 3 est inclinée par rapport au bâti 2 autour d'un deuxième axe de rotation Y.

Comme cela est illustré sur cette figure, lorsque la manette 3 est inclinée dans un deuxième sens (flèche B) autour de l'axe Y, seuls les joints pivots 211, 311 et 212, 312 travaillent. Les joints pivots 11, 111 et 12, 112 sont en butée.

A l'inverse, lorsque la manette 3 est inclinée dans un premier sens (flèche A), opposé au deuxième sens, seuls les joints pivots 11, 111 et 12, 112 travaillent. Les joints pivots 211, 311 et 212, 312 sont en butée.

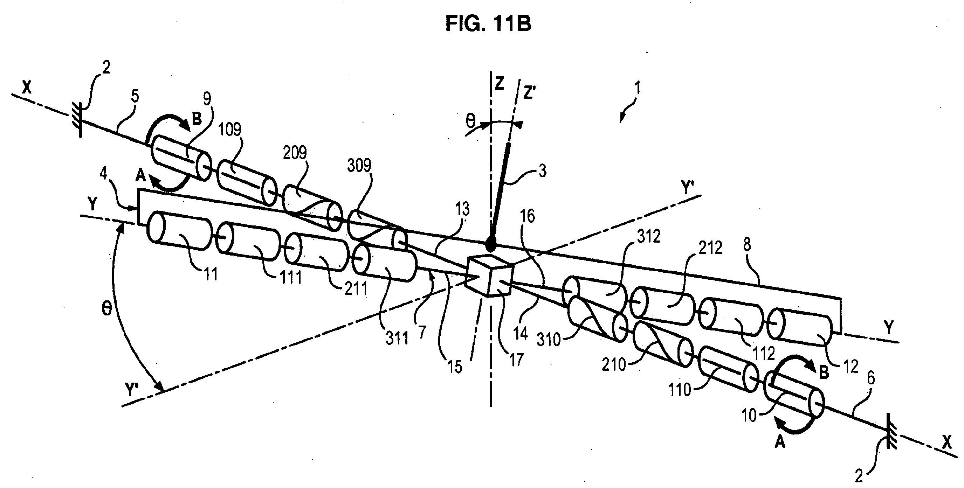

La figure 11B représente de manière schématique le minimanche 1 selon le deuxième mode de réalisation dans une configuration dans laquelle la manette 3 est inclinée par rapport au bâti 2 selon le premier axe de rotation X.

Comme cela est illustré sur cette figure, lorsque la manette 3 est inclinée dans un deuxième sens (flèche B), seuls les joints pivots 209, 309 et 210, 310 travaillent. Les joints pivots 9, 109 et 10, 110 sont en butée.

A l'inverse, lorsque la manette 3 est inclinée dans un premier sens (flèche A), opposé au premier sens, seuls les joints pivots 9, 109 et 10, 110 travaillent. Les joints pivots 209, 309 et 210, 310 sont en butée.

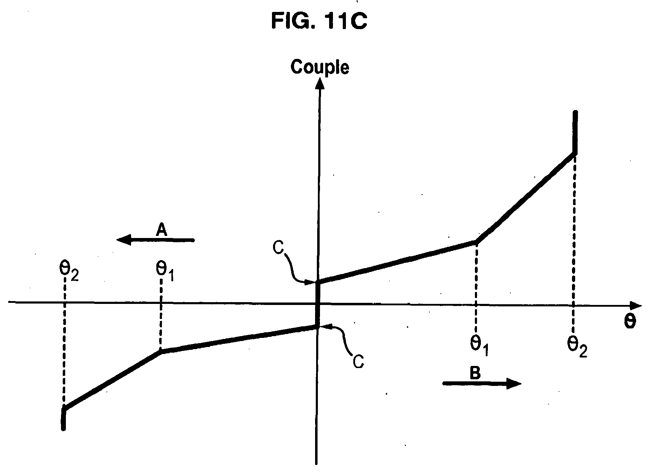

Comme cela est illustré sur la figure 11C, ce deuxième mode de réalisation permet d'obtenir une loi de variation du couple de rappel généré selon les deux axes X et Y présentant un seuil de déclenchement, c'est-à-dire que le pilote doit exercer sur la manette 3 un couple supérieure à une valeur seuil C pour entrainer la manette en rotation selon chacun des sens des axes X et Y (combinaison des raideurs des joints pivots 9 + 109, 209 + 309 et 10 + 110, 210 + 310 selon chacun des sens de l'axe X et combinaison des raideurs des joints pivots 11 + 111, 211 +311 et 12 + 112, 212 + 312 selon chacun des sens de l'axe Y).

De plus, la loi de variation présente une double pente. Plus précisément, la raideur de l'assemblage présente une loi de variation par tronçons. Dans une première plage de débattement comprise entre 0 et θ₁, le couple de rappel généré par la chaîne de joints pivots présente une variation linéaire en fonction de l'angle de rotation θ avec une première raideur. Dans une deuxième plage de débattement comprise entre θ₁ et θ₂, le couple de rappel généré par la chaîne de joints pivots présente une variation linéaire avec une deuxième raideur (raideur des joints pivots 109, 309 et 110, 310 selon chacun des sens de l'axe X et raideur des joints pivots 111, 311 et 112, 312 selon chacun des sens de l'axe Y).

Ainsi, l'association de plusieurs joints pivots assemblés en série permet de produire des lois de retour d'effort complexe, les caractéristiques et l'assemblage des joints pivots pouvant varier en fonction de la loi de retour d'effort souhaitée.

### REFERENCES NUMERIQUES

- 1: Minimanche
- 2: Bâti
- 3: Manette
- 4: Ensemble mécanique de liaison
- 5: Pièce de support
- 6: Pièce de support
- 7: Pièce intermédiaire
- 8: Pièce de raccordement
- 9: Premier joint pivot (Premier axe)
- 10: Deuxième joint pivot (Premier axe)
- 11: Troisième joint pivot (Deuxième axe)
- 12: Quatrième joint pivot (Deuxième axe)
- 13: Bras de la pièce intermédiaire
- 14: Bras de la pièce intermédiaire
- 15: Bras de la pièce intermédiaire
- 16: Bras de la pièce intermédiaire
- 17: Point d'attache commun des bras
- 91: Première partie du joint pivot
- 92: Deuxième partie du joint pivot
- 93: Première lame flexible
- 94: Deuxième lame flexible
- 95: Deuxième lame flexible du deuxième couple de lames
- 96: Première lame flexible du deuxième couple de lames
- 97: Butée
- 98: Elément élastique
- 99: Butée
- 109: Joint pivot (Premier axe, sens A, première et deuxième pentes)
- 110: Joint pivot (Premier axe, sens A, première et deuxième pentes)
- 111: Joint pivot (Deuxième axe, sens A, première et deuxième pentes)
- 112: Joint pivot (Deuxième axe, sens A, première et deuxième pentes)
- 209: Joint pivot (Premier axe, sens B, première pentes)
- 210: Joint pivot (Premier axe, sens B, première pentes)
- 211: Joint pivot (Deuxième axe, sens B, première pentes)
- 212: Joint pivot (Deuxième axe, sens B, première pentes)
- 309: Joint pivot (Premier axe, sens B, première et deuxième pentes)
- 310: Joint pivot (Premier axe, sens B, première et deuxième pentes)
- 311: Joint pivot (Deuxième axe, sens B, première et deuxième pentes)
- 312: Joint pivot (Deuxième axe, sens B, première et deuxième pentes)
- 950: Capteur
- 980: Moyens de réglage en tension
- 1091: Première partie du joint pivot
- 1092: Deuxième partie du joint pivot

## Revendications

1. Minimanche (1) de pilotage d'un aéronef, comprenant :
- un bâti (2),
- une manette (3),
- un ensemble mécanique (4) de liaison de la manette au bâti autorisant une rotation de la manette (3) par rapport au bâti (2) selon un premier axe de rotation (X),
dans lequel l'ensemble mécanique de liaison (4) comprend un premier joint pivot (9), le premier joint pivot (9) comprenant une première partie (91), et une deuxième partie (92) montée mobile par rapport à la première partie (91),
**caractérisé en ce que** l'ensemble mécanique de liaison comprend en outre au moins deux lames flexibles (93, 94), chaque lame flexible présentant une extrémité fixée à la première partie (91) et une autre extrémité fixée à la deuxième partie (92) et étant déformable élastiquement pour autoriser une rotation de la deuxième partie (92) par rapport à la première partie (91) selon le premier axe de rotation (X) et générer un couple de rappel tendant à s'opposer à la rotation de la deuxième partie par rapport à la première partie.

2. Minimanche selon la revendication 1, dans lequel la deuxième partie (92) du premier joint pivot (9) est mobile en rotation par rapport à la première partie (91) du premier joint pivot (9) à partir d'une position de repos selon un premier sens de rotation (A) uniquement, et dans lequel le premier joint pivot (9) comprend une première butée (97) agencée pour interdire un débattement de la deuxième partie (92) dans un deuxième sens (B) opposé au premier sens.

3. Minimanche selon la revendication 2, dans lequel l'ensemble mécanique de liaison (4) comprend un premier jeu de joints pivots (9,10), incluant le premier joint pivot (9) et un deuxième joint pivot (10), le deuxième joint pivot (10) comprenant une première partie et une deuxième partie montée mobile en rotation par rapport à la première partie à partir d'une position de repos selon le deuxième sens de rotation uniquement, et dans lequel le deuxième joint pivot comprend une deuxième butée agencée pour interdire un débattement de la deuxième partie dans le premier sens opposé au deuxième sens.

4. Minimanche selon l'une des revendications 2 ou 3, dans lequel la première butée (97) est agencée de sorte que lorsque le premier joint (9) est en position de repos, les lames (93, 94, 95) du premier joint pivot (9) sont fléchies et exercent sur la deuxième partie (92) du premier joint pivot (9) un couple de rappel non-nul.

5. Minimanche selon la revendication 4, dans lequel la première butée (97) est ajustable en position de manière à autoriser un réglage du couple de rappel non-nul.

6. Minimanche selon l'une des revendications qui précèdent, dans lequel au moins un joint pivot (9) comprend un premier couple de lames (93, 94) et un deuxième couple de lames (95, 96), chaque couple de lames générant un couple de rappel selon le premier axe de rotation (X).

7. Minimanche selon la revendication 6, dans lequel le premier couple de lames (93, 94) et le deuxième couple de lames (95, 96) sont disposés symétriquement l'un par rapport à l'autre.

8. Minimanche selon l'une des revendications qui précèdent, dans lequel au moins un joint pivot (9) comprend en outre un élément élastique (98) reliant la première partie (91) et la deuxième partie (92) entre elles et dans lequel lorsque les lames du joint pivot (9) ne sont pas fléchies, l'élément élastique (98) est en traction entre la première partie (91) et la deuxième partie (92), de sorte que l'élément élastique (98) génère un effort de rappel tendant à provoquer la rotation de la deuxième partie (92) par rapport à la première partie (91).

9. Minimanche selon l'une des revendications qui précèdent, dans lequel l'ensemble mécanique de liaison (4) comprend une première chaîne de joints pivots (9, 109, 209, 309), incluant le premier joint pivot (9) et un troisième joint pivot (109) monté en série avec le premier joint pivot (9), la première partie (91) du premier joint (9) ou respectivement la deuxième partie (92) du premier joint (9), étant montée solidaire de la deuxième partie (1092) ou respectivement de la première partie (1091) du troisième joint pivot (109).

10. Minimanche selon la revendication 9, dans lequel le premier joint pivot (9) comprend une première butée (97) agencée pour limiter un débattement de la deuxième partie (92) du premier joint pivot (9) dans un premier sens de rotation, et le troisième joint pivot (109) comprend une troisième butée agencée pour limiter un débattement de la première partie (1091) du troisième joint pivot dans le premier sens de rotation, de sorte que lorsque la manette (3) est entrainée en rotation par rapport au bâti (2) dans le premier sens de rotation, le premier joint pivot (9) et le troisième joint pivot (109) viennent successivement en butée.

11. Minimanche selon la revendication 10, dans lequel la première butée (97) et/ou la troisième butée est ajustable en position de manière à autoriser un réglage du débattement à partir duquel le premier joint pivot (97) et/ou le troisième joint pivot (109) vient en butée.

12. Minimanche selon l'une des revendications qui précèdent, dans lequel l'ensemble mécanique de liaison (4) comprend un capteur de contrainte ou de déformation monté sur l'une des lames, la lame servant de corps d'épreuve au capteur.

13. Minimanche selon l'une des revendications qui précèdent, dans lequel l'ensemble mécanique de liaison (4) autorise une rotation de la manette (3) par rapport au bâti (2) selon un deuxième axe de rotation (Y), perpendiculaire au premier axe de rotation (X), et dans lequel l'ensemble mécanique de liaison (4) comprend un quatrième joint pivot (11), le quatrième joint pivot (11) comprenant une première partie, une deuxième partie montée mobile par rapport à la première, et au moins deux lames flexibles, chaque lame flexible reliant la première partie et la deuxième partie entre elles et étant déformable élastiquement pour autoriser une rotation de la deuxième partie par rapport à la première partie selon le deuxième axe de rotation et générer un couple de rappel tendant à s'opposer à la rotation de la deuxième partie par rapport à la première partie.

14. Minimanche selon la revendication 13, dans lequel l'ensemble mécanique de liaison (4) comprend une deuxième chaîne de joints pivots (11, 111, 211, 311), incluant le quatrième joint pivot (11) et un cinquième joint pivot (111) monté en série avec le quatrième joint pivot, la première partie du quatrième joint ou la deuxième partie du quatrième joint, étant montée solidaire de la deuxième partie ou respectivement de la première partie du cinquième joint pivot.

## Patentansprüche

1. Sidestick (1) zur Steuerung eines Luftfahrzeugs, der Folgendes umfasst:
- ein Gehäuse (2),
- einen Griff (3),
- eine mechanische Baugruppe (4) zur Verbindung des Griffs mit dem Gehäuse, die eine Drehung des Griffs (3) in Bezug zu dem Gehäuse (2) entlang einer ersten Drehachse (X) zulässt,
wobei die mechanische Verbindungsbaugruppe (4) ein erstes Schwenkgelenk (9) umfasst, wobei das erste Schwenkgelenk (9) einen ersten Teil (91) und einen zweiten Teil (92) umfasst, der in Bezug zum ersten Teil (91) beweglich gelagert ist,
**dadurch gekennzeichnet, dass** die mechanische Verbindungsbaugruppe ferner mindestens zwei biegsame Blätter (93, 94) umfasst, wobei jedes biegsame Blatt ein Ende, das an dem ersten Teil (91) befestigt ist, und ein anderes Ende aufweist, das an dem zweiten Teil (92) befestigt ist und elastisch verformbar ist, um eine Drehung des zweiten Teils (92) in Bezug zum ersten Teil (91) entlang der ersten Drehachse (X) zuzulassen und ein Rückstellmoment zu erzeugen, das dazu neigt, der Drehung des zweiten Teils in Bezug zum ersten Teil entgegen zu wirken.

2. Sidestick nach Anspruch 1, wobei der zweite Teil (92) des ersten Schwenkgelenks (9) in Bezug zum ersten Teil (91) des ersten Schwenkgelenks (9) ausgehend von einer Ruhestellung einzig entlang einer ersten Drehrichtung (A) drehbeweglich ist und wobei das erste Schwenkgelenk (9) einen ersten Anschlag (97) umfasst, der angeordnet ist, um einen Ausschlag des zweiten Teils (92) in eine zweite Richtung (B) zu verbieten, die der ersten Richtung entgegengesetzt ist.

3. Sidestick nach Anspruch 2, wobei die mechanische Verbindungsbaugruppe (4) eine erste Menge von Schwenkgelenken (9, 10) umfasst, die das erste Schwenkgelenk (9) und ein zweites Schwenkgelenk (10) umfasst, wobei das zweite Schwenkgelenk (10) einen ersten Teil und einen zweiten Teil umfasst, der ausgehend von einer Ruhestellung einzig entlang der zweiten Drehrichtung in Bezug zum ersten Teil drehbeweglich gelagert ist, und wobei das zweite Schwenkgelenk einen zweiten Anschlag umfasst, der angeordnet ist, um einen Ausschlag des zweiten Teils in die erste Richtung zu verbieten, die der zweiten Richtung entgegengesetzt ist.

4. Sidestick nach einem der Ansprüche 2 oder 3, wobei der erste Anschlag (97) derart angeordnet ist, dass, wenn das erste Gelenk (9) sich in der Ruhestellung befindet, die Blätter (93, 94, 95) des ersten Gelenks (9) durchbogen sind und auf den zweiten Teil (92) des ersten Schwenkgelenks (9) ein Rückstellmoment ausüben, das nicht Null ist.

5. Sidestick nach Anspruch 4, wobei die Stellung des ersten Anschlags (97) derart einstellbar ist, dass eine Regelung des Rückstellmoments, das nicht Null ist, zugelassen wird.

6. Sidestick nach einem der vorhergehenden Ansprüche, wobei das mindestens eine Schwenkgelenk (9) ein erstes Paar von Blättern (93, 94) und ein zweites Paar von Blättern (95, 96) umfasst, wobei jedes Paar von Blättern ein Rückstellmoment entlang der ersten Drehachse (X) erzeugt.

7. Sidestick nach Anspruch 6, wobei das erste Paar von Blättern (93, 94) und das zweite Paar von Blättern (95, 96) in Bezug zueinander symmetrisch angeordnet sind.

8. Sidestick nach einem der vorhergehenden Ansprüche, wobei mindestens ein Schwenkgelenk (9) ferner ein elastisches Element (98) umfasst, das den ersten Teil (91) und den zweiten Teil (92) untereinander verbindet und wobei, wenn die Blätter des Schwenkgelenks (9) nicht durchbogen sind, das elastische Element (98) sich zwischen dem ersten Teil (91) und dem zweiten Teil (92) in Zug befindet, derart, dass das elastische Element (98) eine Rückstellkraft erzeugt, die dazu neigt, die Drehung des zweiten Teils (92) in Bezug zum ersten Teil (91) zu bewirken.

9. Sidestick nach einem der vorhergehenden Ansprüche, wobei die mechanische Verbindungsbaugruppe (4) eine erste Kette von Schwenkgelenken (9, 109, 209, 309) umfasst, die das erste Schwenkgelenk (9) und ein drittes Schwenkgelenk (109) umfasst, das in Reihe mit dem ersten Schwenkgelenk (9) angeordnet ist, wobei der erste Teil (91) des ersten Gelenks (9) beziehungsweise der zweite Teil (92) des ersten Gelenks (9) fest mit dem zweiten Teil (1092) beziehungsweise dem ersten Teil (1091) des dritten Schwenkgelenks (109) verbunden angebracht ist.

10. Sidestick nach Anspruch 9, wobei das erste Schwenkgelenk (9) einen ersten Anschlag (97) umfasst, der angeordnet ist, um einen Ausschlag des zweiten Teils (92) des ersten Schwenkgelenks (9) in eine erste Drehrichtung zu begrenzen, und das dritte Schwenkgelenk (109) einen dritten Anschlag umfasst, der angeordnet ist, um einen Ausschlag des ersten Teils (1091) des dritten Schwenkgelenks in die erste Drehrichtung zu begrenzen, derart, dass, wenn der Griff (3) drehbar in Bezug zum Gehäuse (2) in die erste Drehrichtung mitgenommen wird, das erste Schwenkgelenk (9) und das dritte Schwenkgelenk (109) aufeinander folgend in Anschlag gelangen.

11. Sidestick nach Anspruch 10, wobei die Stellung des ersten Anschlags (97) und/oder des dritten Anschlags angepasst werden kann, um eine Regelung des Ausschlags zuzulassen, ab dem das erste Schwenkgelenk (97) und/oder das dritte Schwenkgelenk (109) in Anschlag gelangt.

12. Sidestick nach einem der vorhergehenden Ansprüche, wobei die mechanische Verbindungsbaugruppe (4) einen Spannungs- oder Verformungssensor umfasst, der auf einem der Blätter angebracht ist, wobei das Blatt dem Sensor als Probekörper dient.

13. Sidestick nach einem der vorhergehenden Ansprüche, wobei die mechanische Verbindungsbaugruppe (4) eine Drehung des Griffs (3) in Bezug zum Gehäuse (2) entlang einer zweiten Drehachse (Y) zulässt, die senkrecht zur ersten Drehachse (X) ist, und wobei die mechanische Verbindungsbaugruppe (4) ein viertes Schwenkgelenk (11) umfasst, wobei das vierte Schwenkgelenk (11) einen ersten Teil, einen zweiten Teil, der in Bezug zum ersten beweglich gelagert ist, und mindestens zwei elastische Blätter umfasst, wobei jedes biegsame Blatt den ersten Teil und den zweiten Teil untereinander verbindet und elastisch verformbar ist, um eine Drehung des zweiten Teils in Bezug zum ersten Teil entlang der zweiten Drehachse zuzulassen und ein Rückstellmoment zu erzeugen, das dazu neigt, der Drehung des zweiten Teils in Bezug zum ersten Teil entgegen zu wirken.

14. Sidestick nach Anspruch 13, wobei die mechanische Verbindungsbaugruppe (4) eine zweite Kette von Schwenkgelenken (11, 111, 211, 311) umfasst, die das vierte Schwenkgelenk (11) und ein fünftes Schwenkgelenk (111) umfasst, das in Reihe mit dem vierten Schwenkgelenk angeordnet ist, wobei der erste Teil des vierten Gelenks oder der zweite Teil des vierten Gelenks fest mit dem zweiten Teil beziehungsweise dem ersten Teil des fünften Schwenkgelenks verbunden angebracht ist.

## Claims

1. A joystick (1) for controlling an aircraft, comprising:
- a frame (2),
- a lever (3),
- a mechanical linking assembly (4) of the lever to the frame enabling rotation of the lever (3) relative to the frame (2) according to a first axis of rotation (X),
wherein the mechanical linking assembly (4) comprises a first pivot joint (9), the first pivot joint (9) comprising a first part (91), and a second part (92) mounted mobile relative to the first part (91),
**characterized in that** the mechanical linking assembly (4) also comprises at least two flexible blades (93, 94), each flexible blade having an end fixed to the first part (91) and another end fixed to the second part (92) and being resiliently deformable to enable rotation of the second part (92) relative to the first part (91) according to the first axis of rotation (X) and generate a return torque tending to oppose rotation of the second part relative to the first part.

2. The joystick according to Claim 1, wherein the second part (92) of the first pivot joint (9) is mobile in rotation relative to the first part (91) of the first pivot joint (9) from a rest position according to a first direction of rotation (A) only, and wherein the first pivot joint (9) comprises a first stop (97) arranged to prohibit travel of the second part (92) in a second direction (B) opposite the first direction.

3. The joystick according to Claim 2, wherein the mechanical linking assembly (4) comprises a first set of pivot joints (9, 10), including the first pivot joint (9) and a second pivot joint (10), the second pivot joint (10) comprising a first part and a second part mounted mobile in rotation relative to the first part from a rest position according to the second direction of rotation only, and wherein the second pivot joint comprises a second stop arranged to prohibit travel of the second part in the first direction opposite the second direction.

4. The joystick according to any one of Claims 2 or 3, wherein the first stop (97) is arranged such that when the first joint (9) is in the rest position, the blades (93, 94, 95) of the first pivot joint (9) are flexed and exert non-zero return torque on the second part (92) of the first pivot joint (9).

5. The joystick according to Claim 4, wherein the first stop (97) is adjustable in position so as to enable adjusting the non-zero return torque.

6. The joystick according to any one of the preceding claims, wherein at least one pivot joint (9) comprises a first couple of blades (93, 94) and a second couple of blades (95, 96), each couple of blades generating a return torque according to the first axis of rotation (X).

7. The joystick according to Claim 6, wherein the first couple of blades (93, 94) and the second couple of blades (95, 96) are arranged symmetrically relative to each other.

8. The joystick according to any one of the preceding claims, wherein at least one pivot joint (9) further comprises an elastic element (98) connecting the first part (91) and the second part (92) together and wherein when the blades of the pivot joint (9) are not flexed, the elastic element (98) is in traction between the first part (91) and the second part (92), such that the elastic element (98) generates a return force tending to cause rotation of the second part (92) relative to the first part (91).

9. The joystick according to any one of the preceding claims, wherein the mechanical linking assembly (4) comprises a first chain of pivot joints (9, 109, 209, 309), including the first pivot joint (9) and a third pivot joint (109) mounted in series with the first pivot joint (9), the first part (91) of the first joint (9) or respectively the second part (92) of the first joint (9), being mounted integral with the second part (1092) or respectively of the first part (1091) of the third pivot joint (109).

10. The joystick according to Claim 9, wherein the first pivot joint (9) comprises a first stop (97) arranged to limit travel of the second part (92) of the first pivot joint (9) in a first direction of rotation, and the third pivot joint (109) comprises a third stop arranged to limit travel of the first part (1091) of the third pivot joint in the first direction of rotation, such that when the lever (3) is driven in rotation relative to the frame (2) in the first direction of rotation, the first pivot joint (9) and the third pivot joint (109) are successively stopped.

11. The joystick according to Claim 10, wherein the first stop (97) and/or the third stop is adjustable in position so as to enable adjusting the travel from which the first pivot joint (97) and/or the third pivot joint (109) is stopped.

12. The joystick according to any one of the preceding claims, wherein the mechanical linking assembly (4) comprises a strain or deformation sensor mounted on one of the blades, the blade serving as test body for the sensor.

13. The joystick according to any one of the preceding claims, wherein the mechanical linking assembly (4) enables rotation of the lever (3) relative to the frame (2) according to a second axis of rotation (Y), perpendicular to the first axis of rotation (X), and wherein the mechanical linking assembly (4) comprises a fourth pivot joint (11), the fourth pivot joint (11) comprising a first part, a second part mounted mobile relative to the first part, and at least two flexible blades, each flexible blade connecting the first part and the second part together and being resiliently deformable to enable rotation of the second part relative to the first part according to the second axis of rotation and generate return torque tending to oppose rotation of the second part relative to the first part.

14. The joystick according to Claim 13, wherein the mechanical linking assembly (4) comprises a second chain of pivot joints (11, 111, 211, 311), including the fourth pivot joint (11) and a fifth pivot joint (111) mounted in series with the fourth pivot joint, the first part of the fourth joint or the second part of the fourth joint, being mounted integral with the second part or respectively with the first part of the fifth pivot joint.
